## Europäisches Patentamt

## European Patent Office

## Office européen des brevets

(11) Veröffentlichungsnummer: **0 116 833**

**A2**

# (12) EUROPÄISCHE PATENTANMELDUNG

(21) Anmeldenummer: **84100208.2**

(22) Anmeldetag: **11.01.84**

(51) Int. Cl.³: **B 29 D 23/12**
**B 29 D 3/02**

(30) Priorität: **18.01.83 DE 3301345**

(43) Veröffentlichungstag der Anmeldung:
**29.08.84 Patentblatt 84/35**

(84) Benannte Vertragsstaaten:
**DE FR GB IT**

(71) Anmelder: **BASF Aktiengesellschaft**
**Carl-Bosch-Strasse 38**
**D-6700 Ludwigshafen(DE)**

(72) Erfinder: **Fischer, Juergen, Dr.**
**Thomas-Mann-Strasse 62**
**D-6700 Ludwigshafen(DE)**

(72) Erfinder: **Seiler, Erhard, Dr.**
**Erpolzheimer Strasse 1**
**D-6700 Ludwigshafen(DE)**

(72) Erfinder: **Roeber, Artur**
**Dackenheimer Strasse 6**
**D-6700 Ludwigshafen(DE)**

(72) Erfinder: **Heym, Manfred, Dr.**
**Bachweg 6**
**D-6719 Weisenheim(DE)**

(72) Erfinder: **Neitzel, Manfred, Prof. Dr. Dipl.-Ing.**
**Leopoldstrasse 13**
**D-6700 Ludwigshafen(DE)**

(54) Verfahren zur Herstellung von Wickelkörpern aus faserverstärkten thermoplastischen Kunststoffen.

(57) Wickelkörper aus faserverstärkten amorphen thermoplastischen Kunststoffen mit einer Glastemperatur oberhalb von 150°C werden hergestellt, indem man Endlosfaserstränge mit dem Kunststoff imprägniert, die imprägnierten Faserstränge auf einem Wickelkern positioniert, durch Erwärmen auf eine Temperatur oberhalb des Erweichungsbereichs des Kunststoffs zu dem Wickelkörper verbindet und diesen nach dem Abkühlen entformt.

Zum Imprägnieren werden die Endlosfaserstränge derart durch eine 10 bis 30 gew.-%ige Lösung des Kunststoffs in einem organischen Lösungsmittel mit einem Siedepunkt unterhalb von 100°C geführt, daß sie einen Gehalt an Kunststoff von 30 bis 70 Vol.% aufweisen.

Verfahren zur Herstellung von Wickelkörpern aus faserverstärkten thermoplastischen Kunststoffen

Die Erfindung betrifft ein Verfahren zur Herstellung von Wickelkörpern aus langfaserverstärkten amorphen thermoplastischen Kunststoffen mit hoher Temperaturbeständigkeit.

Die Herstellung von Wickelkörpern aus faserverstärkten Duroplasten ist bekannt. Dabei werden Endlosfaserstränge (Rovings) mit niedrigviskosen Duroplast-Ausgangsmaterialien getränkt, die Rovings werden auf einem Wickelkern positioniert und der Duroplast ausgehärtet. Dieser Aushärtprozeß ist eine komplizierte chemische Reaktion, die im Fertigteil abläuft, wodurch die Reproduzierbarkeit der Eigenschaften des Fertigteils nicht immer gewährleistet ist. Außerdem sind die harzimprägnierten Rovings nicht lagerfähig, sondern müssen gleich nach dem Tränken weiterverarbeitet werden.

Man hat daher auch schon versucht, Wickelkörper aus faserverstärkten thermoplastischen Kunststoffen herzustellen. Eine optimale Tränkung, die zu homogener Verteilung des Kunststoffs im Roving führt, ist aber wegen der hohen Viskosität der Thermoplastschmelze zu schwierig.

In der EP-A 56 703 wird daher empfohlen, besonders niedrigviskose Schmelzen mit einer Schmelzviskosität unterhalb von 30 N.s.m$^{-2}$ zum Imprägnieren zu verwenden. Dazu müssen aber – insbesondere im Fall von hochtemperaturbeständigen Thermoplasten – verhältnismäßig niedermolekulare Kunststoffe eingesetzt werden, die zur Versprödung neigen und gegen Spannungsrißkorrosion anfällig sind. Außerdem sind diese Kunststoffe erst bei sehr hohen Temperaturen genügend niedrigviskos, wobei eine thermische Schädigung eintreten kann.

Nach der DE-A 21 56 346 (US 3 785 916) werden Kohlenstoff-Fasern mit einer Lösung eines Polyethersulfons getränkt; nach dem Verdampfen des Lösungsmittels werden die Vorimprägnate diskontinuierlich formgepreßt.

Nach US 4 058 581 werden Endlosfaserstränge mit einer 5 bis 10 gew.%igen Lösung eines thermoplastischen Kunststoffs getränkt; nach dem Verdampfen des Lösungsmittels werden die Stränge zu Bändern pultrudiert oder gewalzt.

In beiden Fällen werden keine Wickelkörper, sondern flächige Halbzeuge hergestellt.

Dd/Kl Der Erfindung lag die Aufgabe zugrunde, ein einfaches Verfahren zur Herstellung von Wickelkörpern aus faserverstärkten amorphen thermoplastischen Kunststoffen mit hoher Temperaturbeständigkeit zu entwickeln, bei dem Kunststoffe von mittlerem und hohem Molekulargewicht eingesetzt werden können und bei dem keine thermische Schädigung des Kunststoffs eintritt.

Diese Aufgaben werden erfindungsgemäß dadurch gelöst, daß man die Endlosfaserstränge zum Imprägnieren derart durch eine 10 bis 30 gew.%ige Lösung des Kunststoffs in einem organischen Lösungsmittel mit einem Siedepunkt unterhalb von 100°C führt, daß sie einen Gehalt an Kunststoff von 30 bis 70 Vol% aufweisen und das Lösungsmittel durch Verdampfen entfernt.

Das Verfahren ist insbesondere mit folgenden thermoplastischen Kunststoffen durchführbar:

1. Polysulfone mit einer Glastemperatur von 190°C und einem Erweichungsbereich von 310 bis 390°C. Hierbei wird als Lösungsmittel vorzugsweise Methylenchlorid verwendet.

2. Polyethersulfone mit einer Glastemperatur von 224°C und einem Erweichungsbereich von 330 bis 400°C, wobei als Lösungsmittel Methylenchlorid, sowie insbesondere ein Gemisch von Methylenchlorid mit Chloroform geeignet ist.

3. Polycarbonate mit einer Glastemperatur von 160°C und einem Erweichungsbereich von 240 bis 320°C, mit Methylenchlorid als Lösungsmittel.

4. Polyetherimide mit einer Glastemperatur von 221°C und einen Erweichungsbereich von 340 bis 425°C, mit Methylenchlorid als Lösungsmittel.

Enthält der thermoplastische Kunststoff noch Lösungsmittelreste, so wird dadurch sein Erweichungsbereich je nach Lösungsmittelgehalt mehr oder weniger stark abgesenkt. Dadurch können die Verarbeitungstemperaturen beim Verbinden der imprägnierten Faserstränge auf dem Wickelkern vorteilhaft abgesenkt werden.

Die ebenfalls hochtemperaturbeständigen, aber teilkristallinen thermoplastischen Kunststoffe Polyetheretherketon und Polyphenylensulfid, sowie die gängigen Polyamide sind in niedrig siedenden Lösungsmitteln nicht löslich, so daß sie nicht nach dem erfindungsgemäßen Verfahren verarbeitet werden können.

Die erfindungsgemäß eingesetzten Endlosfaserstränge können Glasfaser-, Kohlenstoff- oder aromatische Polyamid-Rovings sein, oder zur Herstellung von Hybrid-Verbunden aus Mischungen dieser Materialien bestehen. Statt einzelner Rovings kann man auch schmale Roving-Bänder mit einer Breite bis zu 22 mm verwenden.

Die Rovings werden durch eine 15 bis 30, vorzugsweise 20 bis 25 gew.%ige Lösung des Kunststoffs, die vorzugsweise eine Viskosität unterhalb von 1000 mPas, insbesondere unterhalb von 800 mPas, haben soll, gezogen. Mit derart niedrigviskosen Lösungen ist eine schnelle, optimale, homogene Imprägnierung der Rovings mit dem Kunststoff möglich. Der Roving wird durch das Tränkbad über eine Tauchwalze und nach Verlassen des Tränkbads durch ein Quetschwalzenpaar zum Abstreifen überschüssiger Lösung geführt. Die Bedingungen beim Imprägnieren werden so gewählt, daß der Gehalt des imprägnierten Rovings an Kunststoff zwischen 30 und 70, vorzugsweise zwischen 35 und 50 Vol.% liegt. Der Thermoplast-Gehalt des imprägnierten Rovings kann durch die Konzentration der Lösung, den Druck des Quetschwalzenpaars, die Spannung am Roving, sowie durch die Verweilzeit des Rovings im Tränkbad variiert werden. Im allgemeinen genügt ein einmaliges Durchlaufen des Bades.

Bei einer Ausführungsform der Erfindung wird der imprägnierte Roving unmittelbar nach dem Imprägnieren auf dem Wickelkern positioniert, wobei man das Lösungsmittel vor dem Positionieren entweder ganz oder nur teilweise verdampft. Hierbei wird der Wickelkörper als Fertigteil in einem Arbeitsgang hergestellt.

Bei einer anderen Ausführungsform der Erfindung wird der imprägnierte und vom Lösungsmittel befreite Roving auf eine Spule aufgewickelt. Dieser "Prepreg-Roving" kann als Halbzeug zwischengelagert und bei Bedarf abgewickelt, auf dem Wickelkern positioniert und zum Fertigteil verarbeitet werden.

Die Wickelkörper haben vorzugsweise eine rohrförmige Gestalt, sie können aber auch konisch oder vieleckig geformt sein. Prepreg-Rovings werden vor dem Positionieren auf dem Wickelkern vorzugsweise vorgeheizt. Der Wickelkern wird extern oder intern auf Temperaturen oberhalb des Erweichungsbereichs des gegebenenfalls noch lösungsmittelhaltigen Kunststoffs aufgeheizt, wodurch der imprägnierte Kunststoff erweicht und die Rovings miteinander verbindet. Nach dem Abkühlen unter die Glastemperatur des Kunststoffs werden die gebildeten Wickelkörper entfernt. Man kann auf diese Weise Rohre, Behälter und Behälterteile herstellen, wenn man die Hohlkörper aufschneidet, kann man Halbschalen oder Federkörper erhalten.

Die in den Beispielen genannten Teile und Prozente beziehen sich - sofern nichts anderes gesagt ist - auf das Gewicht.

Beispiele

1. Polysulfon PSU (UDEL von Union Carbide) mit Molekulargewicht 22 000 bis 35 000.

2. Polyethersulfon PES (ULTRASON der BASF) mit Molekulargewicht 20 000 bis 35 000.

3. Polycarbonat PC (MAKROLON 3 100 von Bayer) mit Molekulargewicht ca. 50 000.

4. Polyetherimid PEI (ULTEM 1000 von General Electric) mit Molekulargewicht 20 000 bis 35 000.

Es ist hier jeweils das Zahlenmittel angegeben.

Vorgetrocknetes Kunststoffgranulat wurde bis zur gewünschten Konzentration bei 20°C unter Rühren in Methylenchlorid bzw. bei Polyethersulfon in einer 1 : 1-Mischung von Methylenchlorid und Chloroform gelöst, die Viskositäten der Lösungen wurden bei 23°C bestimmt.

| Beispiel | Kunststoff | Konzentration % | | Viskosität mPas |
|---|---|---|---|---|
| 1. | PSU | a) | 15 | 200 |
|  |  | b) | 20 | 800 |
|  |  | c) | 25 | 3200 |
| 2. | PES | a) | 15 | 110 |
|  |  | b) | 20 | 300 |
| 3. | PC | a) | 10 | 70 |
|  |  | b) | 15 | 260 |
|  |  | c) | 20 | 1300 |
| 4. | PEI | a) | 10 | 45 |
|  |  | b) | 15 | 200 |
|  |  | c) | 20 | 900 |

Die Lösungen wurden zum Tränken von Glas-, Kohlenstoff- und Aramidfasern eingesetzt.

5. Ein Glasfaserroving mit 1200 tex der Firma Gevetex wird, von einem Spulenbaum kommend, mit einer Geschwindigkeit von 150 m/h durch ein Tränkbad mit einer 20%igen Lösung (nach Beispiel 1b) gezogen. Der Thermoplastanteil wurde mit Hilfe der Fadenspannung und eines Quetschwalzenpaares auf 40 Vol.-% reguliert. Nach dem Tränkbad läuft der getränkte Roving durch eine Trockenzone, wobei das Lösungsmittel bei 130°C völlig abgezogen wurde. Der trockene Prepreg-Roving mit 60 Vol.-% Faseranteil wird auf eine Trommel gewickelt und ist bis zur Weiterverwendung beliebig lange lagerstabil.

6. Ein Aramidfaserroving mit 7900 tex wurde wie in Beispiel 5 (mit einer 15%igen Lösung nach Beispiel 3b) getränkt und getrocknet. Er hatte nach dem Aufwickeln auf eine Lagertrommel einen Faseranteil von 55 Vol.-%.

7. 5 Aramidfaserrovings mit je 7900 tex wurden wie in Beispiel 6 mit einer 15%igen Lösung nach Beispiel 4b getränkt. Durch Parallelführung der Rovings erhält man nach der Trockenzone ein "Prepreg-Band" mit 12 mm Breite. Der Fasergehalt im trockenen Band betrug 50 Vol.-%. Das Band wurde wie in den vorhergehenden Beispielen auf Spulen gelagert.

8. Ein Kohlenstoffaserroving mit 6000 Filamenten wurde mit einer 20 %igen Lösung von PES in Methylenchlorid/Chloroform (1 : 1) wie in Beispiel 5 getränkt. Das Lösungsmittel wurde bis zu einem Restanteil von etwa 20 % durch Erwärmen verdampft. Der noch feuchte Roving wurde auf einer Wickelmaschine direkt zu einem Rohr verarbeitet, wobei die Lösungsmittelreste während und nach dem Bewickeln des Dorns bei einer Temperatur von ca. 230°C abgedampft wurden. Das fertige Rohr hatte einen Fasergehalt von 60 Vol.%.

9. Ein Kohlenstoffaserroving mit 6000 Filamenten wurde wie in Beispiel 8 mit PES-Lösung getränkt und getrocknet. Er wurde auf eine Lagertrommel mit großem Radius aufgewickelt. Der Fasergehalt betrug 60 Vol.%.

10. Ein nach Beispiel 5 hergestellter Prepreg-Roving mit 60 Vol.-% Glasfaseranteil wurde folgendermaßen verarbeitet:

Der Prepreg-Roving wurde von der Spule kommend durch eine Vorwärmestrecke geführt, wobei er auf 250°C erwärmt wurde. Anschließend wurde er auf einen zylindrischen Wickeldorn mit 40 mm Durchmesser und 1 m Länge gewickelt. Der Wickeldorn war auf eine Wickelmaschine aufgespannt, die es ermöglichte, den Prepreg-Roving unter einem Winkel von 45° zur Dornachse abzulegen. Der Wickeldorn selbst war mit einer Reflexionsschürze weitgehend umschlossen. Die zum Verschmelzen der abgelegten Prepreg-Rovings nötige Temperatur von 380°C wird mittels Hellstrahlern erzielt. Durch Hin- und Herbewegen des Fadensupportes konnte eine viellagiges Rohr mit $\pm 45°$ Faseranordnung und 3 mm Wandstärke erhalten werden, das nach Entformen einen Glasfaseranteil von 60 Vol.-% und eine Torsionsfestigkeit von 200 N/mm$^2$ aufweist.

11. Ein nach Beispiel 6 hergestellter Prepreg-Roving wurde wie in Beispiel 10 verarbeitet. Das resultierende Rohr hatte einen Fasergehalt von 55 Vol.-% und eine Torsionsfestigkeit von 140 N/mm$^2$.

12. Ein Kohlenstoffaserprepreg mit 40 Vol.-% PES nach Beispiel 9 wurde auf einer Wickelmaschine mit Hellstrahlern und Reflexionsschürze wie in Beispiel 10 zu Rohren für hohe Torsionslasten verarbeitet. Der Dorndurchmesser war hier 50 mm und die Länge 440 mm. Die Fadenablage in bezug auf die Längsachse erfolgte im 90°/ +45°/ −45°/ −45°/ +45°/ 90°-Muster. Nach dem Verschmelzen wurde abgekühlt und entformt.

Die Torsionsfestigkeit des fertigen Rohres betrug 320 N/mm$^2$.

13. Auf einer Wickelmaschine wurde mit dem nach Beispiel 5 hergestellten Prepreg-Roving mit 60 Vol.-% Glasfaser ein Druckbehälter mit zylindrischem Mittelteil und halbkugelförmigen Dornkappen gewickelt. Der Durchmesser war 150 mm, die Länge 400 mm. Die zum Verschmelzen der Prepreg-Rovings miteinander nötige Temperatur von über 350°C wurde wieder mittels Hellstrahlern und einer Reflexionsschürze um den Dorn erzielt. Nach Ende des Bewickelns wird abgekühlt und entformt. Der Wandstärke des Behälters war 2 mm, der Glasgehalt 60 Vol.-%.

## Patentansprüche

1. Verfahren zur Herstellung von Wickelkörpern aus faserverstärkten amorphen thermoplastischen Kunststoffen mit einer Glastemperatur oberhalb von 150°C, wobei man Endlosfaserstränge mit dem Kunststoff imprägniert, die imprägnierten Faserstränge auf einem Wickelkern positioniert, durch Erwärmen auf eine Temperatur oberhalb des Erweichungsbereichs des Kunststoffs zu dem Wickelkörper verbindet und diesen nach dem Abkühlen unter die Glastemperatur des Kunststoffs entformt, dadurch gekennzeichnet, daß man zum Imprägnieren die Endlosfaserstränge derart durch eine 15 bis 30 gew.-%ige Lösung des Kunststoffs in einem organischen Lösungsmittel mit einem Siedepunkt unterhalb von 100°C führt, daß sie einen Gehalt an Kunststoff von 30 bis 70 Vol.% aufweisen und das Lösungsmittel durch Verdampfen entfernt.

2. Verfahren nach Anspruch 1, dadurch gekennzeichnet, daß man die imprägnierten Endlosfaserstränge unmittelbar nach dem Imprägnieren auf dem Wickelkern positioniert, wobei man das Lösungsmittel vor dem Positionieren ganz oder teilweise verdampft.

3. Verfahren nach Anspruch 1, dadurch gekennzeichnet, daß man die imprägnierten und vom Lösungsmittel befreiten Endlosfaserstränge auf eine Spule wickelt, als Halbzeug zwischenlagert und erst bei Bedarf abwickelt und auf dem Wickelkern positioniert.

4. Verfahren nach Anspruch 1, dadurch gekennzeichnet, daß die Endlosfaserstränge aus Glas-, Kohlenstoff- oder aromatischen Polyamid-Fasern bestehen.

5. Verfahren nach Anspruch 1, dadurch gekennzeichnet, daß der Kunststoff Polysulfon, Polyethersulfon, Polycarbonat oder Polyetherimid ist.